# FASCICULE DE BREVET EUROPEEN

(11) **EP 3 763 669 B1**
(45) Date de publication et mention de la délivrance du brevet: **30.08.2023**
(21) Numéro de dépôt: 20184763.9
(22) Date de dépôt: 08.07.2020
(51) Int. Cl.: C01B 3/22

(54) **GENERATEUR DE DIHYDROGENE**
DIHYDROGEN-GENERATOR
DIHYDROGEN GENERATOR

(30) Priorité: 11.07.2019 FR 1907803
(43) Date de publication de la demande: 13.01.2021
(73) Titulaire: Commissariat à l'Energie Atomique et aux Energies Alternatives, 75015 Paris (FR)
(72) Inventeur: FAUCHEUX, Vincent, 38054 GRENOBLE CEDEX 9 (FR); BLANCHOT, Olivier, 38054 GRENOBLE CEDEX 9 (FR); CAPRON, Philippe, 38054 GRENOBLE CEDEX 9 (FR); DELMAS, Jérôme, 38054 GRENOBLE CEDEX 9 (FR); ROUGEAUX, Isabelle, 38054 GRENOBLE CEDEX 9 (FR)
(74) Mandataire: Cabinet Nony

(56) Documents cités:
- EP-A1- 1 607 369
- WO-A1-2017/186612
- FR-A1- 3 072 304
- US-A1- 2016 136 610
- US-A1- 2017 283 258

## Description

### Domaine technique

La présente invention concerne un générateur de dihydrogène par réaction catalysée d'un liquide réactif, et un procédé de génération de dihydrogène.

### Technique antérieure

Les liquides organiques porteurs d'hydrogène permettent de stocker de l'hydrogène sous une forme condensée. Ils sont généralement dénommés sous l'acronyme LOHC, signifiant « Liquid Organic hydrogen Carrier » en anglais.

Les LOHC constituent une voie prometteuse pour stocker, à l'échelle industrielle, du dihydrogène en vue de générer un courant électrique au sein d'une pile à combustible.

Un liquide organique porteur d'hydrogène se présente selon un état riche en hydrogène, dénommé « H₂ rich form » en anglais, ou selon un état pauvre en hydrogène, dénommé « H2 lean form ». Un LOHC riche est obtenu par hydrogénation d'un LOHC pauvre associé, au moyen de dihydrogène résultant généralement de l'hydrolyse de l'eau.

Au sein d'un LOHC, l'hydrogène peut ainsi avantageusement être stocké à température ambiante et à pression atmosphérique, au sein d'une structure moléculaire qui est stable à l'état liquide. Les LOHC sont particulièrement adaptés pour être utilisés par un véhicule automobile, notamment électrique, en particulier accouplé avec une pile à combustible. Pour une telle utilisation, il est nécessaire de déshydrogéner de manière quasi-instantanée le LOHC riche, les temps de démarrage du véhicule étant de l'ordre de la seconde.

La réaction de déshydrogénation du LOHC riche est généralement accélérée en présence d'un catalyseur. Elle est en outre endothermique. Il est donc nécessaire de chauffer le LOHC riche afin de déclencher la déshydrogénation, généralement à une température supérieure à 150 °C.

Il est connu de US 2018/0290116 A1 un réacteur de déshydrogénation présentant une enceinte dans laquelle est introduite un mélange contenant le LOHC riche et un catalyseur. Des tubes permettent d'acheminer un fluide caloporteur dans l'enceinte pour chauffer le LOHC riche. Cependant, il est nécessaire de chauffer l'intégralité du volume de LOHC riche pour déclencher sa déshydrogénation catalysée, si bien que le réacteur de US 2018/0290116 A1 est inadapté à des applications nécessitant une génération rapide de dihydrogène. De plus, tout le volume de LOHC riche doit être chauffé, même pour déshydrogéner seulement une partie de ce volume. Enfin, il est difficile de refroidir rapidement tout le volume de LOHC riche, si bien que la réaction de déshydrogénation ne peut pas être arrêtée rapidement.

US 2013/0197109 A1 décrit un réacteur comportant un tube d'alimentation dans lequel circule un LOHC riche provenant d'un réservoir. Des moyens de chauffage sont disposés radialement à l'extérieur du tube d'alimentation pour chauffer le LOHC riche. Le LOHC riche traverse ensuite une membrane poreuse comportant des particules formées d'alumine et de platine, et au sein de laquelle il est déshydrogéné. Le dihydrogène formé est ensuite séparé du LOHC pauvre. Les moyens de chauffage ne chauffent que le liquide circulant dans le tube d'alimentation, ce qui évite d'avoir à chauffer intégralement le volume du réservoir de LOHC riche. Cependant, afin que le chauffage du LOHC riche soit efficace, il est nécessaire que les moyens de chauffage atteignent une température de consigne bien avant que le LOHC ne s'écoule dans le tube d'alimentation. Le réacteur de US 2013/0197109 A1 ne peut pas répondre à une demande instantanée en hydrogène pour l'application automobile citée. En outre, la membrane induit une perte de charge qui ralentit la cinétique de déshydrogénation du LOHC.

Il existe donc un besoin pour surmonter les inconvénients décrits ci-dessus.

FR 3 072 304 décrit un générateur de dihydrogène comportant un boîtier de catalyse logé dans l'espace intérieur d'une enceinte, le boîtier de catalyse comportant une première et une deuxième pièce étant mobiles l'une par rapport à l'autre entre une position fermé afin de réguler la génération de dihydrogène.

L'invention propose, selon un premier de ses aspects, un générateur de dihydrogène selon la revendication 1.

De préférence, selon un mode de réalisation, le moyen de chauffage est configuré pour chauffer le support de catalyse par effet Joule et le support de catalyse comporte un matériau électriquement conducteur. Un tel moyen de chauffage est facilement intégrable dans le générateur de dihydrogène, et produit rapidement une quantité de chaleur au sein du support de catalyse suffisante pour déclencher la génération de dihydrogène.

En particulier, le moyen de chauffage peut être résistif. Il peut comporter un générateur de courant électrique connecté électriquement au support de catalyse. Ainsi, le support de catalyse est chauffé par effet Joule lorsqu'il est parcouru par un courant produit par le générateur de courant électrique. Le générateur de courant électrique peut être une batterie ou être relié à une source d'alimentation électrique. Par exemple, il est branché sur une prise de courant électrique.

En variante, le moyen de chauffage peut être inductif. Il peut comporter un générateur de champ électromagnétique configuré pour induire un courant électrique dans le support de catalyse. Ainsi, le support de catalyse est chauffé par l'effet Joule résultant du courant induit par le champ électromagnétique. En particulier, le générateur de champ électrique peut être distant du support de catalyse. Il est de préférence exempt de connexion électrique avec le support de catalyse.

Selon un autre mode de réalisation, le moyen de chauffage peut être un moyen de chauffage à micro-onde. Il peut comporter un générateur de micro-onde configuré pour émettre au moins une micro-onde focalisée dans le support de catalyse. Ainsi, le support de catalyse est chauffé par l'interaction de la micro-onde avec le matériau qui le constitue. Par « micro-onde », on entend une onde dont la longueur d'onde est comprise entre 0,3 GHz et 1 THz.

Le générateur de dihydrogène selon l'invention permet un chauffage particulièrement rapide du support de catalyse. Le liquide réactif, lorsqu'il imprègne le support, est chauffé par le support de catalyse qui l'environne, et la génération de dihydrogène à partir du liquide réactif s'opère rapidement au contact du catalyseur. Ainsi, le générateur de dihydrogène peut alimenter à la demande, par exemple en moins de cinq secondes, voire en moins d'une seconde, un appareil de production d'énergie, tel qu'une pile à combustible, auquel il est relié.

Le générateur de dihydrogène selon l'invention peut présenter au moins une des caractéristiques optionnelles suivantes décrites ci-après, seule ou en combinaison.

Le support de catalyse est poreux. De préférence, le support de catalyse comporte une mousse solide.

La mousse peut présenter une porosité comprise entre 60 % et 99%.

La taille moyenne des pores est de préférence supérieure à 500 µm. On favorise ainsi la cinétique d'imprégnation du liquide réactif dans les pores de la mousse, et le cas échéant, le dépôt du catalyseur dans les pores.

La « taille d'un pore » est sa dimension maximale. La taille des pores peut se mesurer par analyse d'images d'une surface de la mousse. La « taille moyenne des pores » est la moyenne arithmétique des tailles de pores.

La mousse peut présenter une forme cylindrique de révolution ou sphérique ou annulaire ou parallélépipédique.

Le volume de la mousse peut être compris entre 10 cm³ et 10 dm³.

De préférence, afin de favoriser les échanges thermiques entre la mousse et le liquide réactif imprégné, le matériau constitutif de la mousse est thermiquement conducteur. De préférence, il présente une conductivité thermique supérieure à 2 W.m⁻¹.K⁻¹, afin d'accélérer la montée en température du liquide réactif lors de l'initiation de la production de dihydrogène.

La mousse est en un matériau électriquement conducteur. Elle peut ainsi être chauffée par effet Joule au moyen du générateur de courant électrique. De préférence, le matériau électriquement conducteur présente une conductivité électrique supérieure à 250 Ω⁻¹.m⁻¹, de préférence supérieure à 1000 Ω⁻¹.m⁻¹, de préférence supérieure à 2500 Ω⁻¹.m⁻¹. Ainsi, lors du passage d'un courant électrique, la température peut être homogène dans le volume de la mousse. La variation de température entre les zones les plus chaude et plus froide de la mousse peut être inférieure à 10 °C. La dégradation du liquide réactif sous l'effet d'une température excessive peut ainsi être évitée. Notamment, dans la variante où le liquide réactif est un LOHC, on évite ainsi de dégrader la structure porteuse du dihydrogène, de sorte à assurer la réalisation de plusieurs cycles de déshydrogénation du LOHC riche et d'hydrogénation du LOHC pauvre. En outre, la génération d'un gaz autre que le dihydrogène par dégradation du LOHC peut être évitée.

Le matériau électriquement conducteur est le carbon sous la forme de graphite, et/ou
- un métal, notamment choisi parmi le fer, le cobalt, le cuivre, l'aluminium, le nickel, le magnésium, le manganèse et leurs alliages.

Le support de catalyse comporte le catalyseur.

De préférence, le catalyseur est en un métal platinoïde, de préférence choisi parmi le platine, le palladium, le rhodium, l'iridium et leurs alliages.

De préférence, le support de catalyse comporte un revêtement catalytique comportant, de préférence formé par, le catalyseur, qui recouvre au moins partiellement, voire complètement les parois des pores de la mousse. Le liquide réactif imprégné dans le support de catalyse peut ainsi accéder à une surface apparente élevée de catalyseur, ce qui accélère la cinétique de génération de dihydrogène.

Le revêtement électriquement conducteur peut être disposé entre la mousse et le revêtement catalytique. Dans une variante, le revêtement électriquement conducteur est formé par le revêtement catalytique, qui est de préférence en au moins un métal choisi parmi le platine, le palladium, le rhodium, le ruthénium et leurs mélanges.

Le support de catalyse peut comporter des connecteurs électriques reliés au générateur de courant électrique, le revêtement électriquement conducteur définissant un circuit électrique entre les connecteurs électriques. Les connecteurs électriques peuvent être soudés sur la mousse ou sur le revêtement électriquement conducteur.

De préférence, le support de catalyse est configuré pour que sa température soit augmentée de plus de 150 °C et/ou de moins de 350°C par effet Joule, en moins de cinq secondes, de préférence en moins de deux secondes, voire en moins d'une seconde, suite au passage d'un courant électrique le traversant, le courant électrique ayant une intensité comprise entre 1 A et 1000 A, et étant généré sous une tension comprise entre 10 V et 500 V.

Le support de catalyse peut présenter une résistance électrique supérieure à 0,01 Ω, par exemple égale à 25 Ω.

Le générateur de courant électrique peut être configuré pour produire une puissance électrique comprise entre 10 W et 50 kW, par exemple d'environ 10 kW. Il peut être configuré pour générer un courant électrique d'intensité comprise entre 1 A et 1000 A, par exemple égale à 20 A, sous une tension comprise entre 10 V et 500 V.

L'espace intérieur d'enceinte peut contenir le liquide réactif.

Le liquide réactif peut être choisi parmi un liquide organique porteur d'hydrogène riche, une solution aqueuse d'hydrure, notamment d'un borohydrure, et leurs mélanges. Le liquide réactif peut être différent du méthanol.

De préférence, le liquide réactif est un liquide organique porteur d'hydrogène riche. Le liquide organique porteur d'hydrogène riche peut être choisi parmi le toluène, le naphtalène, le dibenzyltoluène, aussi dénommé H0-DBT, le N-éthylcarbazole, aussi dénommé H0-NEC, et leurs mélanges.

Le liquide organique porteur d'hydrogène riche est associé à un liquide organique porteur d'hydrogène pauvre. En particulier :
- le toluène est associé au méthylcyclohexane,
- le naphtalène est associé au décalin,
- le dibenzyltoluène est associé au perhydrodibenzyltoluène, aussi dénomme H18-DBT, et
- le N-éthylcarbazole est associé au dodécahydro-N-éthylcarbazole, aussi dénommé H12-NEC.

Le générateur de dihydrogène de l'invention comporte un boîtier de catalyse logé dans l'espace intérieur d'enceinte, le boîtier de catalyse comportant des première et deuxième pièces définissant une chambre de catalyse dans laquelle le support de catalyse est logé, les première et deuxième pièces étant mobiles l'une par rapport à l'autre entre une position fermée dans laquelle la chambre de catalyse est hermétiquement close et une position ouverte dans laquelle la chambre de catalyse est en communication fluidique avec l'espace intérieur d'enceinte.

Par « position ouverte », on entend toute position dans laquelle la chambre de catalyse est en communication fluidique avec l'espace intérieur. Le générateur de dihydrogène peut être disposé selon plusieurs positions ouvertes, qui diffèrent les unes des autres par la distance et/ou l'angle séparant les première et deuxième pièces. En particulier, le générateur de dihydrogène peut être disposé selon des première et deuxième positions ouvertes différentes l'une de l'autre, le volume de la chambre de catalyse accessible au liquide réactif dans la première position ouverte étant différent du volume de la chambre de catalyse accessible au liquide réactif dans la deuxième position ouverte. De cette façon, la cinétique de génération de dihydrogène, et en particulier le débit de dihydrogène, peuvent être modifiés en déplaçant les première et deuxième pièces relativement l'une à l'autre, entre deux positions ouvertes différentes. Ainsi, le débit de dihydrogène généré peut être. En particulier, la position ouverte peut être une position ouverte extrêmale selon laquelle la course de l'actionneur est atteinte.

La génération de d'hydrogène peut être avantageusement régulée au moyen du boîtier de catalyse. En particulier, elle peut être arrêtée de manière quasi-instantanée. Par exemple, pour empêcher la génération de dihydrogène, le boîtier de catalyse peut être disposé dans la position fermée. Lorsque la génération de d'hydrogène est requise, par exemple sur demande d'une pile à combustible à laquelle générateur de dihydrogène est relié, le boîtier de catalyse peut être disposé dans la position ouverte, de manière que le liquide réactif puisse imprégner le support de catalyse, entrer en contact avec le catalyseur et réagir sous l'effet du catalyseur.

De préférence, le rapport du volume de la chambre de catalyse, mesuré dans la configuration fermée du boîtier de catalyse, sur le volume du support de catalyse est supérieur à 1 %, de préférence supérieur à 10 %. Ainsi, au cours de la génération de dihydrogène, suite à la fermeture du boîtier de catalyse, le volume de liquide réactif contenu dans la chambre de catalyse et disponible pour la génération de dihydrogène est faible. La génération de dihydrogène est ainsi arrêtée quasi-instantanément.

Les première et deuxième pièces peuvent être mobiles en translation le long d'un axe X et/ou en rotation autour d'un axe X l'une par rapport à l'autre.

La configuration dans laquelle est disposé le boîtier, *i.e.* en position ouverte ou en position fermée, peut-être dépendante de la pression de dihydrogène dans l'enceinte.

Le générateur de dihydrogène peut comporter un organe de rappel lié à la première pièce et à la deuxième pièce, et comprimé dans la position ouverte. Ainsi, suite à la mise en contact entre le LOHC riche et le catalyseur, la pression de dihydrogène généré peut augmenter dans l'enceinte, la force induite par la pression d'hydrogène s'appliquant sur la première pièce ou sur la deuxième pièce peut être supérieure à l'effort de compression dans l'organe de rappel, ce qui induit un mouvement de la première pièce relativement à la deuxième pièce jusqu'à fermeture du boîtier.

La rigidité de l'organe de rappel peut être prédéterminée pour définir la pression de fermeture au-dessus et en dessous de laquelle le boîtier de catalyse est ouvert ou fermé respectivement. Ainsi, le débit de dihydrogène produit par le générateur de dihydrogène peut être adapté en fonction de l'application visée.

L'organe de rappel peut être un ressort, notamment hélicoïdal, ou une membrane élastique, notamment dont la longueur est réduite par effet de torsion et/ou de compression lorsqu'un effort est appliqué longitudinalement sur la membrane.

Le boîtier de catalyse est disposé dans l'espace intérieur d'enceinte. La mise en communication fluidique du boîtier de catalyse avec l'espace intérieur de l'enceinte est ainsi facilitée en position ouverte.

De préférence, l'espace intérieur contient le liquide réactif et le boîtier de catalyse est intégralement immergé dans le liquide réactif. La génération de dihydrogène peut être aisément stoppée dans une telle configuration, notamment lorsque la pression du dihydrogène dans l'enceinte ne résulte en aucune force de compression sur le boîtier de catalyse.

De préférence, le support de catalyse est fixé, en particulier collé ou vissé, sur la première pièce ou sur la deuxième pièce.

Le support de catalyse peut mobile ou fixe par rapport à l'enceinte lors du passage de la position ouverte à la position fermée.

Dans la configuration ouverte, le boîtier de catalyse définit au moins une ouverture pour l'écoulement du liquide réactif dans et hors du boîtier de catalyse. Le boîtier de catalyse peut comporter au moins deux ouvertures, de préférence disposées sur des faces différentes du boîtier de catalyse, de manière à favoriser l'écoulement du liquide réactif en direction du support de catalyse.

Pour ouvrir ou fermer à la demande le boîtier de catalyse, le générateur de dihydrogène peut comporter un actionneur relié au système catalytique et configuré pour disposer le système catalytique dans la position ouverte et/ou dans la position fermée, et une unité de commande pour commander l'actionneur. L'ouverture et/ou la fermeture du boîtier de catalyse peut être commandé indépendamment de la pression de dihydrogène dans l'enceinte.

L'actionneur peut être fixé au boîtier de catalyse. Il peut être fixé sur la première pièce et/ou sur la deuxième pièce.

L'actionneur peut être fixé sur le support de catalyse.

L'actionneur peut être choisi parmi :
- un vérin, notamment un vérin hydraulique ou un vérin électrique ou un vérin pneumatique,
- un moteur électrique, par exemple un moteur pas à pas,
- un vérin à piston magnétique, dans lequel le piston est mobile dans un solénoïde, et
- un électroaimant.

De préférence, dans au moins l'une des positions ouverte et fermée du système catalytique, au moins une partie du vérin est disposée dans la chambre de catalyse. Ainsi, l'empiètement du vérin sur le volume de l'enceinte accessible au liquide réactif est limité.

Le générateur de dihydrogène peut comporter une unité de commande pour contrôler l'actionneur, afin de disposer le boîtier de catalyse dans une position ouverte ou dans la position fermée. L'unité de commande peut être configurée pour émettre un signal de commande, de préférence électrique, afin de disposer le boîtier de catalyse dans une position ouverte ou dans la position fermée.

L'unité de commande peut être configurée pour commander l'actionneur selon au moins un mode de pilotage paramétré au moyen d'au moins un paramètre de pilotage.

Le mode de pilotage peut être un mode de pilotage de régulation, tel que décrit par la suite, ou un mode de pilotage spécifique, différent du mode de pilotage de régulation.

L'unité de commande comporte de préférence un processeur adapté à l'exécution d'un programme d'ordinateur, dénommé programme de pilotage, pour la mise en oeuvre d'au moins l'un des modes de pilotage.

En particulier, selon le mode de régulation, le ou les paramètres de pilotage comportent de préférence au moins un, de préférence au moins deux paramètres de régulation.

De préférence, l'unité de commande est configurée pour effectuer une comparaison d'au moins une grandeur à réguler avec le au moins un paramètre de régulation, dite comparaison de régulation, et est configurée pour envoyer un signal de commande en fonction du résultat de la comparaison de régulation.

De préférence, le mode de régulation est paramétré au moyen de paramètres de pilotage comportant des premier et deuxième paramètres de régulation, et l'unité de commande est configurée pour recevoir une grandeur à réguler et pour commander l'actionneur de sorte à disposer le système catalytique selon une première position et selon une deuxième position, lorsque la grandeur à réguler est inférieure au premier paramètre de régulation et respectivement supérieure au deuxième paramètre de régulation. Les première et deuxième positions peuvent être des positions ouvertes, de préférence différentes l'une de l'autre. Selon une variante préférée, la première position est une position ouverte et la deuxième position est la position fermée.

La grandeur à réguler peut être choisie parmi la pression du dihydrogène dans l'espace intérieur d'enceinte, la pression du dihydrogène dans un appareil, de préférence une pile à combustible, avec laquelle le générateur de dihydrogène est en communication fluidique, le débit de dihydrogène généré et une température, par exemple la température du liquide ou la température du catalyseur ou la température de l'environnement de l'appareil.

De préférence, la grandeur à réguler est la pression de dihydrogène dans l'espace intérieur, et les premier et deuxième paramètres de régulation sont respectivement des pression minimale de régulation et pression maximale de régulation.

La pression minimale de régulation et/ou la pression maximale de régulation peuvent être modifiées, par exemple par l'utilisateur du dispositif ou par un appareil de production d'énergie alimenté par le générateur de dihydrogène. Ainsi, la durée d'ouverture et/ou la durée de fermeture du boitier de catalyse et le débit de dihydrogène sont modifiés. Le débit de dihydrogène peut aussi être varié par ajustement de la course de l'actionneur.

De préférence, l'unité de commande est configurée pour disposer le système catalytique dans une première position, respectivement dans une deuxième position, lorsque la pression de gaz dans l'espace intérieur est inférieure ou égale à la pression minimale de régulation, respectivement supérieure ou égale à la pression maximale de régulation. Les première et deuxième positions peuvent être des positions ouvertes. De préférence, les première et deuxième positions sont respectivement une position ouverte et une position fermée.

La pression minimale de régulation et/ou la pression maximale de régulation peuvent être définies par l'utilisateur du générateur de dihydrogène. En particulier, elles peuvent être déterminées en fonction de l'application à laquelle la génération de dihydrogène est destinée. Avantageusement, par modification des pressions minimale et/ou maximale de régulation, le générateur de dihydrogène peut assurer une génération de gaz à débit de consigne constant et à une pression adaptée à l'application à laquelle le dihydrogène est destiné. Par exemple, la pression minimale de régulation et/ou la pression maximale de régulation peut être envoyée à l'unité de commande par un appareil, par exemple une pile à combustible, alimenté en dihydrogène par le générateur de dihydrogène.

De préférence, le générateur de dihydrogène comporte au moins une unité de mesure d'une grandeur choisie parmi la pression de dihydrogène dans l'espace intérieur, la pression de dihydrogène dans un appareil, de préférence une pile à combustible, avec lequel le générateur de dihydrogène est en communication fluidique, le débit de dihydrogène généré et une température, par exemple la température du liquide réactif ou la température du catalyseur ou la température de l'environnement du générateur de dihydrogène. L'unité de mesure est en outre configurée pour envoyer ladite grandeur mesurée à l'unité de commande. L'unité de mesure peut être reliée électriquement à l'unité de commande et peut être configurée pour envoyer la valeur mesurée de la grandeur sous la forme d'un signal électrique.

Dans un mode de réalisation, l'unité de mesure est disposée dans l'espace intérieur.

Le générateur de dihydrogène peut comporter au moins deux unités de mesure, qui, de préférence, sont chacune configurées pour mesurer des grandeurs différentes. En particulier, le générateur de dihydrogène peut comporter une unité de mesure de la pression de gaz dans l'espace intérieur, une unité de mesure du débit de gaz généré, et au moins une unité de mesure d'une température.

Le support de catalyse peut en outre être configuré pour être chauffé par échange convectif avec le liquide réactif et/ou par échange thermique conductif avec le liquide réactif et/ou par le rayonnement d'une source thermique distante du support de catalyse.

Un procédé de génération de dihydrogène avec le générateur de dihidrogène de l'invention comporte:
a) la fourniture d'un générateur de dihydrogène selon l'invention, l'espace intérieur d'enceinte comportant le liquide réactif,
b) le chauffage du support de catalyse par le moyen de chauffage à une température supérieure ou égale à une température de réaction à partir de laquelle s'opère la réaction catalysée de génération du dihydrogène à partir du liquide réactif.

La température de réaction dépend de la composition du liquide réactif, et l'homme du métier sait facilement la déterminer de manière routinière. Par exemple, le LOHC riche est le H0-DBT qui contient en masse 6,2 % de dihydrogène. La réaction de déshydrogénation du LOHC riche est endothermique et est caractérisée par une enthalpie de déshydrogénation d'environ 70 kiloJoule par mole de dihydrogène (kJ.mol⁻¹ H₂). La valeur d'enthalpie de déshydrogénation des LOHC riche contenant plus de 5 % en masse de dihydrogène, est généralement comprise entre 25 kJ.mol⁻¹ H₂ et 100 kJ.mol⁻¹ H₂.

Dans la variante où le liquide réactif est un LOHC riche, la température de réaction peut être comprise entre 150 °C et 350 °C.

Préalablement à la génération de dihydrogène, la pression dans l'espace intérieur d'enceinte peut être comprise entre 1 bar et 10 bar. Sauf indication contraire, par « pression », on entend une pression absolue, c'est-à-dire nulle dans le vide.

Le chauffage peut avoir lieu préalablement à l'ouverture du boîtier de catalyse. Ainsi, le liquide réactif qui pénètre dans la chambre de catalyse entre en contact avec le support de catalyse chauffé, ce qui accélère ainsi la cinétique de réaction catalysée de génération du dihydrogène.

De préférence, le procédé comporte la mesure d'une grandeur à réguler et l'asservissement de l'ouverture et de la fermeture du boîtier de catalyse en fonction de la valeur de la grandeur à réguler mesurée.

En particulier, le procédé comporte l'ouverture, respectivement la fermeture, du boîtier de catalyse lorsque la valeur de la grandeur à contrôler est inférieure ou égale, respectivement supérieure ou égale à un premier paramètre de régulation et respectivement supérieure au deuxième paramètre de régulation

La grandeur à réguler et les premier et deuxième paramètres de régulation peuvent être tels que décrits ci-dessus.

Par ailleurs, l'invention concerne un dispositif comportant un appareil de production d'énergie et un générateur de dihydrogène selon l'invention pour alimenter en dihydrogène l'appareil de production d'énergie, l'appareil étant configuré pour produire de l'énergie sous forme de chaleur et/ou d'un courant électrique, par réaction du dihydrogène.

L'appareil de production d'énergie peut être une pile à combustible ou un moteur à combustion d'hydrogène.

L'appareil de production d'énergie peut comporter un module de contrôle pour commander la production de dihydrogène par le générateur de dihydrogène.

Le dispositif peut être choisi parmi un drone, un téléphone intelligent, un ordinateur portable, une voiture, un bus, un vélo et une moto.

Par ailleurs, l'invention concerne l'utilisation du générateur de dihydrogène selon l'invention, pour générer un débit de dihydrogène supérieur à 1 cm³/min.

L'utilisation peut être destinée à alimenter un dispositif stationnaire ou un dispositif mobile, notamment choisi parmi un drone, un téléphone intelligent, un ordinateur portable, une voiture, un bus, un vélo et une moto. Par dispositif « stationnaire », on entend un dispositif immobile pendant une période d'au moins 1 jour, voire d'au moins 1 mois. Le dispositif stationnaire est par exemple une station de secours tel qu'un groupe électrogène.

De préférence, le débit de dihydrogène généré est inférieur à 1 m³/min, notamment lorsque le support de catalyse est chauffé au moyen d'un générateur de courant électrique générant un courant électrique sous une tension inférieure à 500 V.

L'utilisation peut être destinée à alimenter un dispositif stationnaire avec un débit de dihydrogène supérieure à 1 m³/min. De préférence alors, le support de catalyse est chauffé au moyen d'un générateur de courant électrique générant un courant électrique sous une tension supérieure à 500 V.

D'autres caractéristiques, variantes et avantages de l'invention ressortiront mieux à la lecture de la description détaillée et des exemples qui vont suivre, donnés à titre illustratif et non limitatif, et à l'examen du dessin annexé, sur lesquels :
[Fig 1] la figure 1 représente de manière schématique, et en coupe longitudinale, un exemple de générateur de dihydrogène;
[Fig 2] la figure 2 représente de manière schématique un deuxième exemple de générateur de dihydrogène vu selon une coupe longitudinale, ;
[Fig 3] la figure 3 représente de manière schématique, selon une coupe longitudinale, un troisième exemple de générateur de dihydrogène selon l'invention, comportant un boîtier de catalyse disposé selon une configuration ouverte ;
[Fig 4] la figure 4 représente l'exemple de la figure 3 selon une configuration fermée ;
[Fig 5] la figure 5 représente de manière schématique, selon une coupe longitudinale, un quatrième exemple de générateur de dihydrogène selon l'invention, comportant un boîtier de catalyse disposé selon une configuration fermée ;
[Fig 6] la figure 6 représente l'exemple de la figure 5 selon une configuration ouverte ;
[Fig 7] la figure 7 représente, selon une coupe longitudinale, une variante de réalisation du boîtier de catalyse d'un générateur de dihydrogène selon l'invention ;
[Fig 8] la figure 8 représente, selon une coupe longitudinale, une autre variante de réalisation du boîtier de catalyse d'un générateur de dihydrogène selon l'invention, disposé dans une configuration fermée ;
[Fig 9] la figure 9 représente le boîtier de catalyse illustré sur la figure 8 dans une configuration ouverte ;
[Fig 10] la figure 10 représente, selon une coupe longitudinale, une autre variante de réalisation du boîtier de catalyse d'un générateur de dihydrogène selon l'invention, disposé dans une configuration fermée ;
[Fig 11] la figure 11 représente le boîtier de catalyse illustré sur la figure 10 dans une configuration ouverte ;
[Fig 12] la figure 12 est une vue 3D en perspective du générateur de la figure 10;
[Fig 13] la figure 13 est une vue 3D en perspective du générateur de la figure 11 ; et
[Fig 14] la figure 14 représente de manière schématique, un dispositif comportant un appareil de production d'énergie alimenté en dihydrogène par le générateur de dihydrogène selon l'invention.

Dans les figures, les échelles et proportions des différents organes et unités constituant le générateur de dihydrogène ne sont pas nécessairement respectées. Par ailleurs, par souci de clarté, des organes et unités peuvent être représentés comme n'étant pas au contact les uns des autres alors qu'ils le sont en pratique. Des références différentes peuvent désigner un même organe ou une même unité.

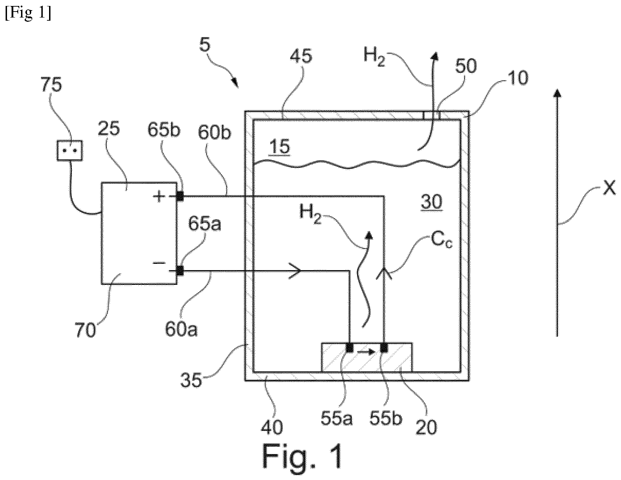

La figure 1 représente un premier exemple de réalisation du générateur de dihydrogène 5.

Le générateur de dihydrogène comporte :
- une enceinte 10 définissant un espace intérieur d'enceinte 15,
- un support de catalyse 20 logé dans l'espace intérieure d'enceinte, et
- un générateur de courant électrique 25 relié électriquement au support de catalyse.

L'espace intérieur d'enceinte contient un liquide réactif 30, de préférence un LOHC riche. L'enceinte est en un matériau inerte au liquide réactif. Elle peut être en un matériau polymère résistant à la température à partir de laquelle s'opère la réaction catalysée de génération du dihydrogène à partir du liquide réactif. L'enceinte est par exemple en téflon. L'enceinte comporte une paroi latérale 35 qui s'étend selon une direction longitudinale X, une paroi inférieure 40 définissant un fond de l'enceinte lorsque la direction longitudinale est parallèle à la direction de la gravité, et une paroi supérieure 45, présentant une ouverture d'évacuation 50 pour le dihydrogène. Dans une variante, l'ouverture d'évacuation peut être surmontée d'une valve, de préférence régulatrice de débit. Par ailleurs, l'ouverture d'évacuation peut être surmontée d'une valve de surpression, non représentée, pour évacuer le dihydrogène lorsque la pression du dihydrogène dans l'espace intérieur est supérieure à une pression seuil.

L'enceinte comporte par ailleurs, une membrane de séparation, non représentée, pour séparer l'hydrogène du liquide réactif et faciliter son évacuation hors de l'enceinte. L'ouverture d'évacuation est reliée à la membrane de séparation.

Dans l'exemple illustré, le support de catalyse consiste en une mousse faite d'un matériau électriquement conducteur et en un revêtement catalytique formé d'un catalyseur de la réaction de génération de dihydrogène, qui recouvre les parois des pores de la mousse.

Le support de catalyse étant poreux est imprégné par le liquide réactif qui est en contact avec le revêtement catalytique.
Le support de catalyse est fixé sur une paroi de l'enceinte. En variante, il peut être mobile dans l'espace intérieur d'enceinte.

Le support de catalyse comporte deux connecteurs électriques 55a-b disposés à distance l'un de l'autre. Les connecteurs sont reliés par des câbles d'alimentation électrique 60a-b à chacune des bornes 65a-b du générateur de courant électrique de manière à former un circuit électrique de chauffe Cc. Ainsi, lorsqu'un courant circule dans le circuit électrique de chauffe, le support de catalyse est chauffé par effet Joule. Le générateur de courant électrique définit ainsi un moyen de chauffage 70 résistif du support de catalyse.

L'augmentation de température induite dans la mousse par l'effet Joule se transmet, notamment par conduction, au revêtement catalytique et au liquide réactif. Ainsi, lorsqu'elle atteint une température de réaction à partir de laquelle s'opère la réaction catalysée de génération du dihydrogène à partir du liquide réactif, du dihydrogène H₂ est généré dans l'espace intérieur d'enceinte et s'évacue par l'ouverture d'évacuation. Par ailleurs, après réaction au sein de la structure poreuse du support de catalyse, la concentration en liquide réactif est plus faible dans le support de catalyse que dans l'espace intérieur. Par effet de diffusion, le liquide réactif de l'espace intérieur d'enceinte imprègne alors les pores de la mousse. La réaction de production de dihydrogène peut ainsi se poursuivre, tant que la température du support de catalyse est suffisamment élevée.

Lorsque l'alimentation du circuit électrique est coupée, le support de catalyse refroidit et la réaction de génération de dihydrogène s'arrête dès que la température du support de catalyse devient inférieure à la température de réaction.

Dans l'exemple illustré, le générateur de courant électrique 25 est disposé hors de l'enceinte et les câbles d'alimentation électriques traversent des perçages formés dans une paroi de l'enceinte. Dans une variante non représentée, il peut être logé dans l'espace intérieur d'enceinte, et par exemple il est au contact du support de catalyse. Afin d'éviter tout court-circuit, le générateur de courant électrique est de préférence logé dans un coffret étanche au liquide réactif.

Le générateur de courant électrique peut être relié à une source d'alimentation électrique. Par exemple, il est branché sur une prise de courant électrique 75. En variante, le générateur de courant électrique peut être une batterie.

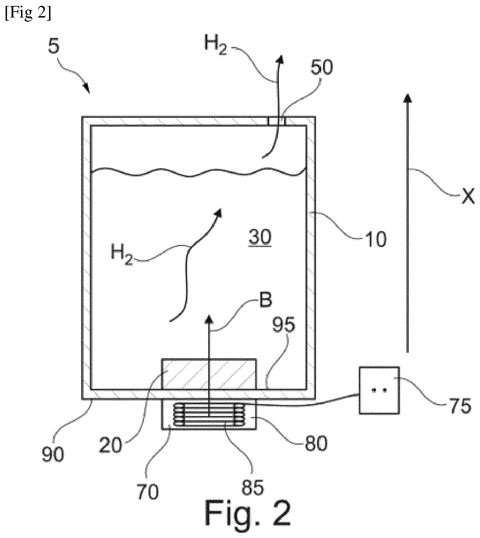

La figure 2 représente un deuxième exemple de générateur de dihydrogène qui diffère de l'exemple de la figure 1 en ce qu'il comporte un générateur de champ électromagnétique 80 au lieu d'un générateur de courant électrique.

Le générateur de champ électromagnétique comporte un enroulement 85 de fil électriquement conducteur, par exemple du cuivre, et est relié à source d'alimentation électrique 75. Ainsi, lorsqu'un courant électrique parcourt l'enroulement, un champ magnétique B est généré, qui induit un courant électrique circulant dans le matériau électriquement conducteur constituant la mousse. Il en résulte alors un échauffement du support de catalyse par effet Joule et une génération de dihydrogène dans les conditions décrites pour l'exemple illustré sur la figure 1. Le générateur de champ électromagnétique définit ainsi un moyen de chauffage 70 inductif du support de catalyse.

Dans l'exemple décrit, le générateur de champ électromagnétique est disposé hors de l'enceinte. Il est de préférence disposé sur la face 90 opposée à la face 95 sur laquelle est fixé le support de catalyse. De préférence, pour éviter toute interaction avec le champ électromagnétique, l'enceinte est en un matériau inerte vis-à-vis d'un champ magnétique, par exemple en un thermoplastique.

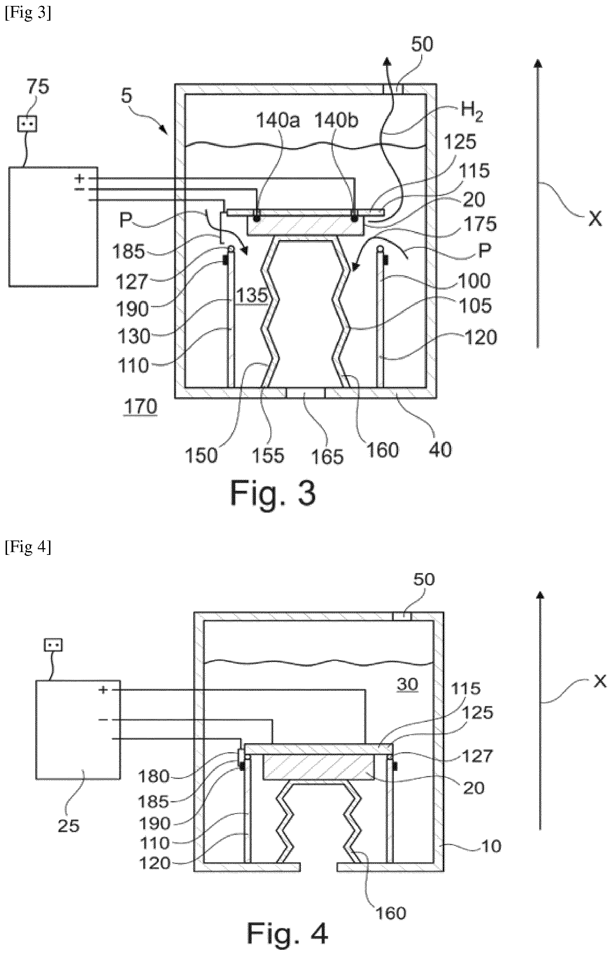

Le générateur de dihydrogène 5 illustré sur la figure 3 diffère du générateur illustré sur la figure 1 en ce qu'il comporte en outre un boîtier de catalyse 100 et un organe de rappel élastique 105.

Le boîtier de catalyse est logé dans l'espace intérieur d'enceinte. Il comporte des première 110 et deuxième 115 pièces étant respectivement un récipient 120 et un couvercle 125. Il comporte en outre un joint d'étanchéité 127.

Le récipient est fixé sur la paroi inférieure 40 de l'enceinte. Il comporte une paroi latérale 130 qui s'étend selon la direction X. Le joint d'étanchéité est monté sur une face longitudinale du récipient, entre le récipient et le couvercle.

Le récipient et le couvercle définissent ensemble une chambre de catalyse 135 dans laquelle est logé le support de catalyse 20.

Le support de catalyse est fixé, par exemple collé sur le couvercle. Il est de forme cylindrique de révolution, mais d'autres formes peuvent être envisagées, notamment une forme annulaire ou de portion d'anneau ou parallélépipédique.

Le couvercle présente des perçages 140a-b dans lesquels les câbles d'alimentation électrique sont engagés. De préférence, afin d'obtenir un effet Joule maximal, le couvercle est de préférence formé d'un matériau électriquement isolant, de préférence d'un polymère ou d'un matériau céramique.

L'organe de rappel élastique est formé d'une membrane souple 150, par exemple faite d'un élastomère. La membrane souple présente une forme générale tubulaire. Elle comporte un fond 155, fixé sur le couvercle, à partir duquel une paroi latérale 160 s'étend selon la direction X. Dans l'exemple illustré, la paroi latérale de la membrane présente une forme de soufflet d'accordéon, qui facilite son déploiement. Une telle forme n'est cependant pas limitative.

La paroi latérale de la membrane débouche du côté opposé au fond sur une fenêtre 165 ménagée dans la paroi inférieure de l'enceinte. Ainsi, la pression régnant dans l'espace interne de la membrane est égale à la pression à l'extérieur 170 du générateur de dihydrogène, qui par exemple est la pression atmosphérique.

Sur la figure 3, le boîtier de catalyse est dans une configuration ouverte, dans laquelle la membrane souple est dans sa position d'équilibre, la pression dans l'espace intérieur d'enceinte étant égale à la pression atmosphérique. Le couvercle est disposé à distance du récipient, et définit ainsi une ouverture 175 entre le couvercle et le récipient, par laquelle le liquide réactif peut pénétrer dans la chambre de catalyse.

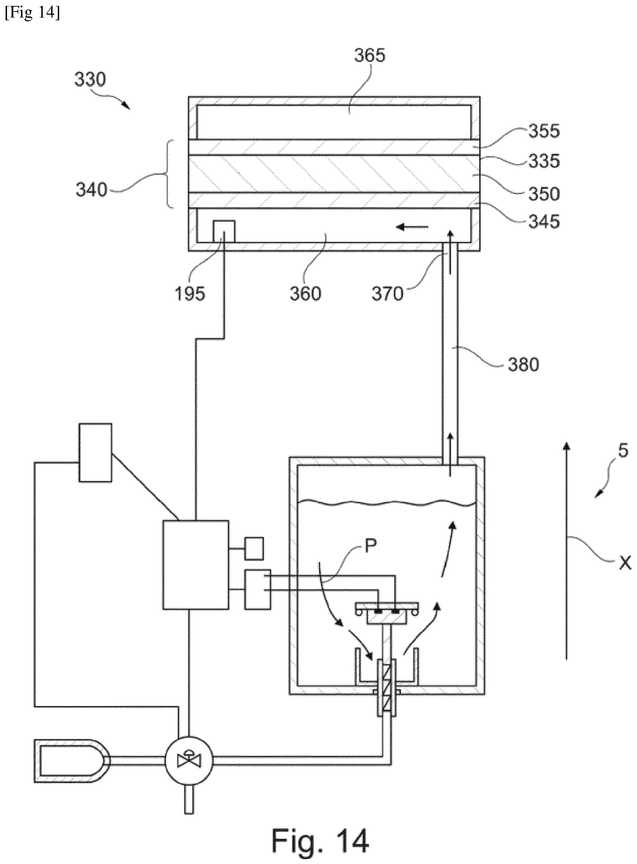

Comme illustré selon la flèche P, le liquide réactif peut alors pénétrer dans la chambre de catalyse et imprégner les pores du support de catalyse. En chauffant par effet Joule le support de catalyse, le dihydrogène est généré comme cela a été décrit pour la figure 1. Il s'écoule sous l'effet de la poussée d'Archimède à travers le liquide réactif dans l'espace intérieur d'enceinte et s'évacue à travers l'ouverture d'évacuation 50, comme indiqué par la flèche H₂, par exemple vers la chambre anodique d'une pile à combustible comme illustré sur la figure 14.

La génération de dihydrogène au sein de l'enceinte résulte en une augmentation de la pression dans l'enceinte si le dihydrogène, qui est évacué au travers de l'ouverture d'évacuation, n'est pas intégralement consommé, par exemple par une pile à combustible. La pression dans l'enceinte s'applique sur le couvercle 125, et résulte en un effort orienté vers le fond du récipient, qui comprime la membrane souple jusqu'à fermeture du boîtier de catalyse. Dans la configuration fermée du boîtier de catalyse, le couvercle vient prendre en sandwich le joint d'étanchéité 127, comme illustré sur la figure 4. Ainsi, le liquide réactif contenu hors de la chambre de catalyse ne peut y pénétrer.

La génération de dihydrogène est ainsi stoppée, dès que la chambre de catalyse ne contient plus suffisamment de liquide réactif.

Par ailleurs, le générateur de dihydrogène peut comporter un contacteur électrique 180 pour informer de l'ouverture ou de la fermeture du boîtier de catalyse. Dans l'exemple illustré sur la figure 3, le contacteur électrique comporte une languette 185 métallique montée sur le couvercle et un pion 190 métallique faisant saillie de la paroi latérale du récipient. Le pion et la languette sont chacun reliés électriquement au générateur de courant électrique.

Dans la configuration fermée du boîtier de catalyse, la languette est en contact avec le pion, si bien que le circuit électrique formé par le pion, la languette et le générateur est fermé. Le générateur est ainsi informé de la fermeture du boîtier et peut être configuré pour couper l'alimentation électrique du support de catalyse.

Lorsque la génération de dihydrogène est arrêtée suite à la fermeture du boîtier de catalyse, le dihydrogène est progressivement évacué de l'enceinte à travers l'ouverture d'évacuation. La pression de dihydrogène diminue dans l'enceinte. Ainsi, la force exercée par la pression de dihydrogène sur le couvercle devient inférieure à la force exercée par la membrane 150 et par la pression interne dans la membrane. La membrane se détend alors jusqu'à la position d'équilibre illustrée sur la figure 3. Par ailleurs, la languette 185 est déplacée à distance du pion, et le circuit formé par le générateur de courant électrique, et le contacteur électrique est ouvert, ce qui déclenche l'alimentation électrique du support de catalyse par le générateur de courant électrique. Du dihydrogène est alors à nouveau généré.

La production du dihydrogène au moyen du générateur de dihydrogène de la figure 4 s'effectue de manière passive, c'est-à-dire que le boîtier de catalyse s'ouvre et de se ferme sous le seul effet de la pression de dihydrogène dans l'enceinte.

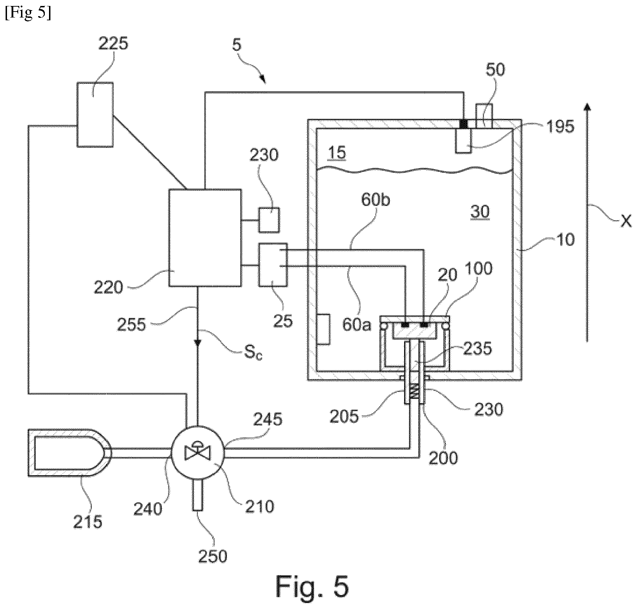

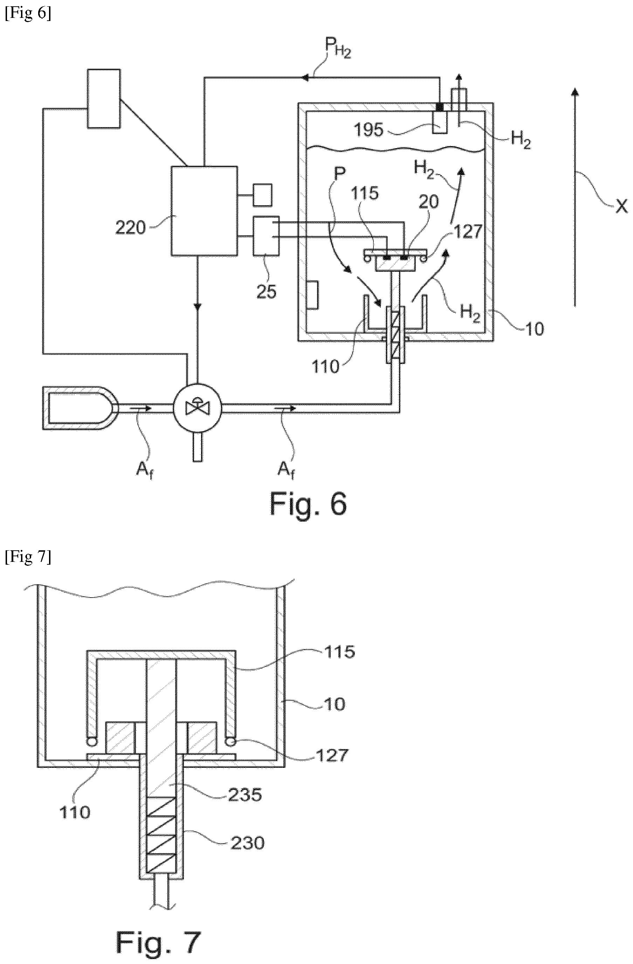

Les figures 5 et 6 illustrent un autre exemple de réalisation du générateur selon l'invention, dans lequel la production du dihydrogène s'effectue de manière active.

Le générateur de dihydrogène 5 comporte :
- une enceinte 10, un boîtier de catalyse 100, un support de catalyse 20 et un générateur de courant électrique 25 tels que décrits précédemment, et une unité de mesure de pression 195;
- un actionneur 200 sous la forme d'un vérin 205 pneumatique fixé sur l'enceinte et sur le support de catalyse ;
- une vanne de commande 210 en communication fluidique d'une part avec le vérin, pour délivrer un fluide sous pression au vérin, et d'autre part avec une cartouche 215 de fluide, et
- une unité de commande 220 reliée électriquement à la vanne de commande, à l'unité de mesure de pression et au générateur de courant électrique.

Le générateur de dihydrogène comporte en outre une batterie 225 pour alimenter électriquement l'unité de commande et la vanne de commande. Dans une variante, le générateur de dihydrogène peut être exempt d'une telle batterie, et l'alimentation électrique de l'unité de commande et de la vanne de commande peut être assurée par le générateur de courant électrique.

Par ailleurs, le générateur de dihydrogène peut comporter un interrupteur 230 relié à l'unité de commande, de sorte que lorsque l'interrupteur est disposé en position d'extinction, l'unité de commande n'est pas alimentée électriquement et le générateur de courant électrique ne délivre aucun courant électrique dans le support de catalyse. De préférence alors, le boîtier de catalyse 100 est disposé en position fermée. Lorsque l'interrupteur est disposé en position d'allumage, l'unité de commande est alimentée électriquement.

L'unité de mesure de pression 195 est disposée dans l'espace intérieur d'enceinte. Dans l'exemple de la figure 5, elle est disposée à proximité de l'ouverture d'évacuation 50. D'autres dispositions sont toutefois envisageables.

Par ailleurs, des trous sont ménagés respectivement dans la paroi de fond du récipient et dans la paroi inférieure de l'enceinte. Ils traversent de part en part les épaisseurs respectives des dites parois et sont fixés en regard l'une de l'autre, et peuvent présenter des formes identiques.

Le vérin est disposé dans lesdits trous et est fixé rigidement sur l'enceinte. Il comporte un corps 230 cylindrique et un piston 235 logé dans le corps cylindrique et mobile par rapport au corps cylindrique. Le vérin comporte par ailleurs un ressort hélicoïdal. Le ressort est fixé à ses extrémités opposées sur le corps et sur le piston, et assure une fonction de rappel. Dans une variante, le vérin peut être de type « double effet », pourvu de deux chambres alimentées chacune en fluide compressible, l'une des chambres assurant la fonction de rappel. Dans la position fermée du générateur de dihydrogène illustré sur la figure 5, le ressort est dans une position d'équilibre, dans laquelle il n'exerce pas de force de rappel sur piston.

Le vérin définit une chambre de vérin pour contenir un fluide sous pression de sorte à déplacer le piston entre la position fermée illustrée sur la figure 5 et une position ouverte illustrée sur la figure 6. Le vérin, et en particulier le piston, est fixé sur le support de catalyse. Ainsi, le couvercle, qui est fixé sur le support de catalyse, est mobile en translation par rapport à l'enceinte et au récipient entre les positions ouverte et fermée.

La vanne de commande présente une entrée 240 connectée à la cartouche de fluide au moyen d'un tuyau d'entrée. Elle présente une sortie d'alimentation 245 connectée à la chambre de vérin au moyen d'un tuyau. Elle comporte en outre une sortie de purge 250, débouchant sur l'environnement extérieur à au générateur de dihydrogène où la pression est inférieure à la pression dans la cartouche, et est de préférence la pression est atmosphérique. La vanne est reliée électriquement par l'intermédiaire d'un câble 255 à l'unité de commande qui est configurée pour envoyer à la vanne de commande un signal de commande électrique S_{c}, et la vanne de commande est configurée pour recevoir ledit signal.

Le signal de commande peut être un signal de commande d'ouverture de la vanne de commande. Lorsque la vanne de commande reçoit un tel signal de commande d'ouverture, elle est disposée dans une configuration où la sortie de purge est close, et la cartouche de fluide sous pression est mise en communication fluidique avec la chambre de vérin. Le fluide peut alors s'écouler de la cartouche à travers les entrée et sortie d'alimentation de la vanne de commande jusque dans la chambre de vérin, comme illustré au moyen des flèches A_{f}. Ainsi, le piston peut être déplacé de la position fermée à la position ouverte, ou maintenu en position ouverte, comme illustré sur la figure 6.

Le signal de commande peut être un signal de commande de fermeture. Lorsque la vanne de commande reçoit un signal de commande de fermeture, elle est disposée dans une configuration où l'entrée de la vanne de commande est close et où la sortie de purge et la sortie d'alimentation sont ouvertes et mises en communication fluidique. Le fluide contenu dans la chambre de vérin s'écoule dans le tuyau d'alimentation jusqu'à l'extérieur du générateur de dihydrogène au travers de la sortie de purge. La pression diminuant dans la chambre de vérin, le piston se déplace alors, sous l'effet de l'effort de rappel du ressort ou d'une contre pression dans la variante où le vérin est de type « double effet », de sorte à disposer le système catalytique en position fermée.

Le signal électrique envoyé par l'unité de commande à la vanne de commande est fonction du résultat, obtenu par l'unité de commande, de la comparaison entre une pression minimale de régulation et/ou une pression maximale de régulation d'une part et la pression du dihydrogène dans l'enceinte, mesurée par l'unité de mesure de pression 195 d'autre part.

Dans l'exemple des figures 5 et 6, l'unité de mesure de pression comporte un capteur de pression pour mesurer la pression du dihydrogène dans l'enceinte. L'unité de mesure de pression envoie la pression du dihydrogène P_{H2} qu'elle mesure à l'unité de commande 220 qui la reçoit et la compare aux pressions de régulation minimale et maximale. Lorsque que la pression du dihydrogène est inférieure à la pression minimale de régulation, l'unité de commande émet un signal de commande d'ouverture à la vanne de commande jusqu'à ce que le vérin déplace le boîtier de catalyse dans la position ouverte. L'unité de commande envoie par ailleurs un signal au générateur de courant électrique pour produire un courant électrique afin de chauffer le support de catalyse pas effet Joule, pour déclencher la génération de dihydrogène.

Comme cela a été décrit ci-dessus, la production de dihydrogène est accompagnée d'une augmentation de la pression dans l'enceinte. Lorsque la pression du dihydrogène est supérieure à la pression maximale de régulation, l'unité de commande émet un signal de commande de fermeture à la vanne de commande, de sorte à disposer le boîtier de catalyse dans la position fermée. La génération de dihydrogène est alors arrêtée. Le dihydrogène restant dans l'espace intérieur d'enceinte en est évacué, si bien que la pression de dihydrogène dans l'enceinte diminue, jusqu'à devenir inférieure à la pression minimale de régulation. Un nouveau cycle de génération de dihydrogène comportant l'ouverture du boîtier de catalyse peut alors être mis en oeuvre.

La figure 7 illustre une variante de l'exemple illustré sur la figure 5 dans lequel le boîtier de catalyse comporte une première pièce 110 étant un plateau 240 fixé sur l'enceinte et une deuxième pièce 115 étant une cloche 245 reposant sur le plateau dans la position fermée du boîtier de catalyse. Le support de catalyse est fixé sur le plateau. La cloche est fixée sur le vérin et est mobile par rapport à l'enceinte entre les positions ouverte et fermée du boîtier de catalyse.

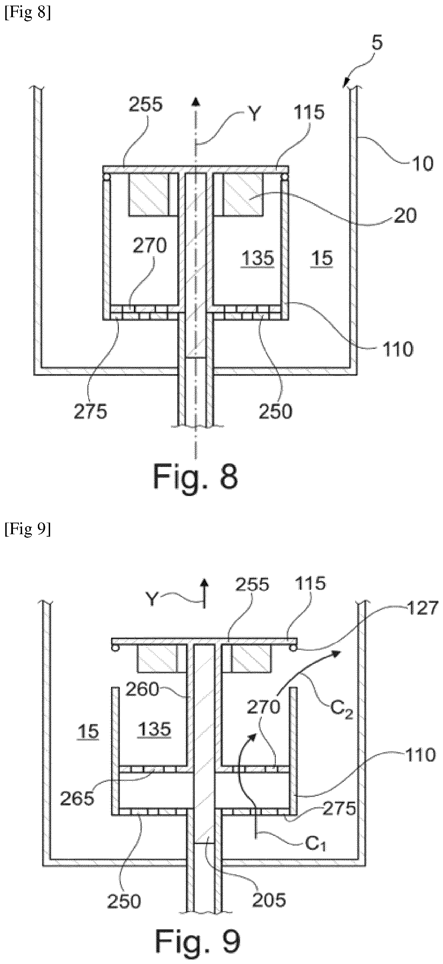

Les figures 8 et 9 illustrent une autre variante de boîtier de catalyse d'un générateur de dihydrogène selon l'invention en position respectivement fermée et ouverte.

Le boîtier de catalyse illustré sur les figures 8 et 9 diffère du boîtier de catalyse illustré sur la figure 5 en ce qu'il comporte une première pièce 110 sous la forme d'un récipient ayant une paroi inférieure 250 disposée à distance de l'enceinte. Par ailleurs, il comporte une deuxième pièce 115 qui présente une paroi supérieure 255 définissant un couvercle pour fermer le récipient. Une portion tubulaire 260 fait saillie de la paroi supérieure de la deuxième pièce. Le vérin 205 est logé en partie dans la portion tubulaire. Par ailleurs, à son extrémité opposée à celle fermée par le couvercle, la deuxième pièce présente une paroi inférieure 265 s'étendant transversalement à la direction longitudinale Y du vérin.

Les parois inférieures des première et deuxième pièces sont percées chacune d'au moins une, de préférence de plusieurs fenêtres 270, 275 traversant chacune desdites parois dans son épaisseur. Les fenêtres des parois inférieures des première et deuxième pièces sont disposées de sorte qu'en position fermée, comme illustré sur la figure 8, lesdites parois inférieures des première et deuxième pièces forment un ensemble étanche au liquide réactif, isolant la chambre de catalyse 135 de l'espace intérieur d'enceinte 15, et en position ouverte, comme illustré sur la figure 9, définissent un chemin d'accès fluidique, représenté par la flèche C₁, entre l'espace intérieur de l'enceinte et la chambre de catalyse à travers lesdites parois inférieures des première et deuxième pièces. Ainsi, en position ouverte, le boîtier de catalyse définit un chemin d'accès fluidique entre la paroi supérieure de la deuxième pièce et la paroi latérale de la première pièce, illustré par la flèche C₂ et au moins un chemin d'accès entre les parois inférieures des première et deuxième pièces, illustré par la flèche C₁. La convection du liquide réactif au sein de la chambre de catalyse est ainsi améliorée ce qui optimise le rendement de la réaction de génération de dihydrogène. Dans l'exemple des figures 8 et 9, le passage de la position ouverte à la position fermée s'effectue par translation de la deuxième pièce par rapport à la première pièce le long de la direction Y.

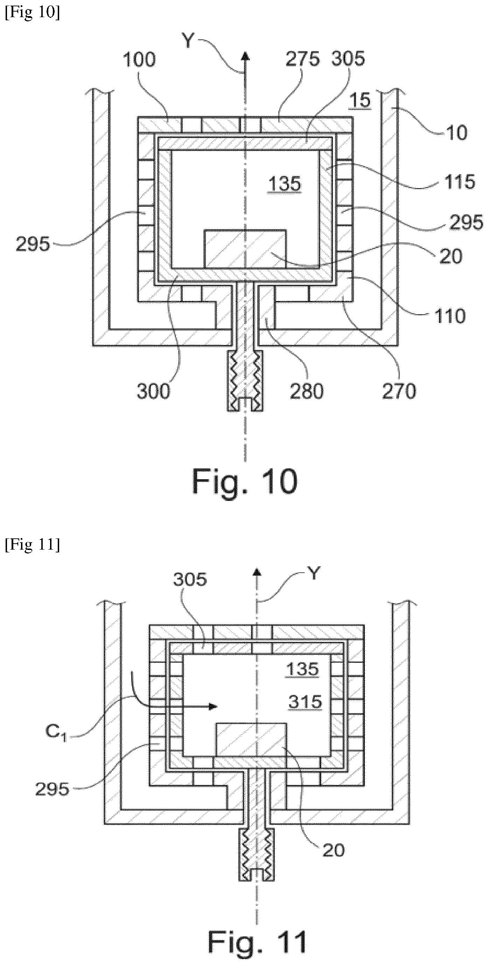

Les figures 10 à 13 illustrent une autre variante de générateur de dihydrogène selon l'invention dans lequel les première et deuxième pièces sont mobiles en rotation l'une par rapport à l'autre entre les positions ouverte et fermée autour d'un axe Y.

La première pièce présente une forme générale de portion tubulaire cylindrique de révolution et creuse et présentant des extrémités opposées fermées respectivement par une paroi inférieure 270 et par une paroi supérieure 275 s'étendant selon des directions transverses à l'axe de révolution Y de la portion tubulaire

La paroi inférieure de la première pièce présente un évidement traversant la paroi inférieure dans son épaisseur et duquel fait saillie un espaceur 280. L'espaceur maintient la portion tubulaire de la première pièce à distance de l'enceinte. L'espaceur présente une forme de tube creux et cylindrique, de préférence de révolution, coaxial à la portion tubulaire de la première pièce.

Par ailleurs, les parois inférieure, supérieure et latérale de la première pièce comportent au moins une, de préférence une pluralité de fenêtres 295 traversant chacune desdites parois dans leur épaisseur. Dans une variante, au moins une desdites parois de la première pièce peut être exempte de fenêtres.

La deuxième pièce 115 présente une forme générale de tube creux cylindrique de révolution surmonté à ses extrémités opposées par une paroi inférieure 300 et une paroi supérieure 305 amovible. La deuxième pièce définit ainsi une chambre de catalyse 135, dans laquelle est logée le support de catalyse 20.

En outre, les parois inférieure, supérieure et latérale de la deuxième pièce comportent au moins une, de préférence une pluralité de fenêtres 305 traversant chacune desdites parois dans son épaisseur. Dans une variante, au moins une desdites parois de la deuxième pièce peut être exempte de fenêtres.

La deuxième pièce est au moins partiellement, voire intégralement reçue, dans l'espace intérieur 315 de la portion tubulaire de la première pièce comme illustré sur la figure 9. Les première et deuxième pièces sont de formes complémentaires et sont coaxiales.

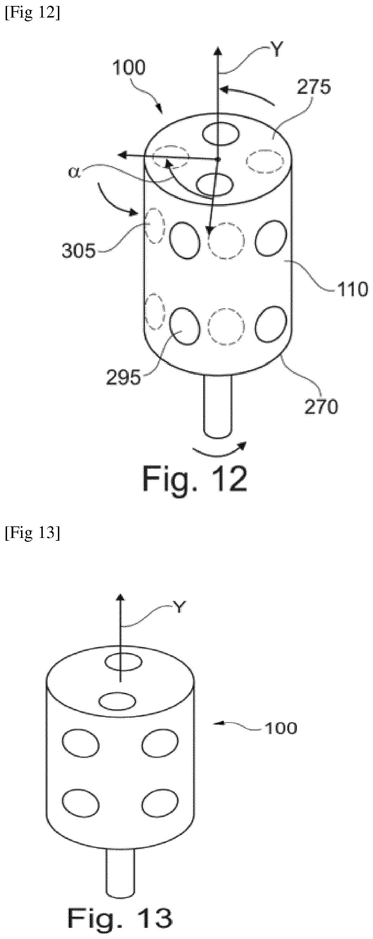

Les fenêtres des parois inférieures, latérales et supérieures des première et deuxième pièces sont disposées respectivement de sorte qu'en position fermée, comme illustré sur les figures 10 et 12, lesdites parois inférieures des première et deuxième pièces obstruent les fenêtres des deuxième et première pièces respectivement et forment un ensemble étanche au liquide réactif, isolant la chambre de catalyse de l'espace intérieur d'enceinte, et en position ouverte, comme illustré sur les figures 11 et 13, définissent un chemin d'accès fluidique, illustré par la flèche C₁ entre la chambre de catalyse et l'espace intérieur d'enceinte à travers lesdites parois inférieures, latérales et supérieures des première et deuxième pièces. Sur la figure 12, les fenêtres 305 de la deuxième pièce sont représentées en pointillés, pour indiquer leur position angulaire relative aux fenêtres 295 de la première pièce.

Le passage de la position fermée à la position ouverte s'effectue par rotation d'un angle α de la deuxième pièce par rapport à la première pièce autour de l'axe Y. A cette fin, la deuxième pièce est fixée sur un arbre d'un moteur pas à pas 320, engagé dans l'espaceur.

La figure 14 illustre un dispositif 330, comportant une pile à combustible 335, qui est alimentée en dihydrogène par un générateur de dihydrogène 5 selon l'invention.

La pile à combustible comporte une unité d'oxydation 340 incluant un empilement formé d'une anode 345, d'une membrane électrolytique 350 et d'une cathode 355. Elle définit par ailleurs une chambre anodique 360 pour distribuer le dihydrogène à l'anode, et une chambre cathodique 365, pour distribuer du dioxygène à la cathode.

La chambre anodique comporte par ailleurs un orifice d'entrée 370 pour l'alimentation en dihydrogène, relié à l'ouverture d'évacuation du générateur de dihydrogène au moyen d'un tube creux de transport 380.

Le générateur de dihydrogène illustré sur la figure 14 est identique à celui décrit sur la figure 5, à ceci près que l'unité de mesure de pression 195 est disposée dans la chambre anodique 385 de la pile à combustible. Dans une autre variante non représentée, l'unité de mesure de pression 25 peut être disposée dans le tube creux 410.

Ainsi, en fonctionnement, la génération de dihydrogène est adaptée en fonction du besoin en dihydrogène de la pile à combustible.

### Exemple

Un exemple de générateur de dihydrogène selon l'invention est décrit qui comporte:
- un support de catalyse d'un volume de 100 cm³, formé d'une mousse d'alumine, présentant une porosité comprise entre 60 % et 70 %, présentant des pores de taille supérieure à 500 µm, et recouverte d'une couche de nickel et d'un revêtement de 2 g de platine, et
- un générateur de courant électrique fonctionnant sous une tension inférieure à 500 V, et délivrant un courant de 20 A pour générer une puissance de chauffage de 10 kW dans le support de catalyse.

Le support de catalyse présente une résistance de 25 Ω.

Un tel générateur peut générer 20 g de dihydrogène par minute ou, de manière équivalent 250 1 de dihydrogène par minute, à partir de H0-DBT. Il est adapté à alimenter une pile à combustible produisant 25 kW d'énergie électrique.

Bien entendu, l'invention n'est pas limitée aux exemples et modes de réalisation du générateur de dihydrogène selon l'invention décrits ci-dessus. En particulier, une réaction d'hydrogénation d'un LOHC pauvre en présence d'une source en hydrogène peut être mise en oeuvre au moyen du générateur de dihydrogène selon l'invention.

## Revendications

1. Générateur de dihydrogène (5) comportant :
- une enceinte (10) définissant un espace intérieur d'enceinte (15) pour contenir un liquide réactif (30) apte à générer du dihydrogène au contact d'un catalyseur,
- un support de catalyse (20) logé dans l'espace intérieur d'enceinte, le support de catalyse étant poreux et imprégnable par le liquide réactif et comportant un catalyseur de la réaction de génération de dihydrogène à partir du liquide réactif,
- un moyen de chauffage (70),
le support de catalyse étant configuré pour être chauffé par le moyen de chauffage autrement que par le transfert thermique consistant en l'échange thermique convectif avec le liquide réactif et l'échange thermique conductif avec le liquide réactif et le rayonnement d'une source thermique distante du support de catalyse, le support de catalyse comportant une mousse solide en un matériau électriquement conducteur qui est le carbone sous la forme de graphite et/ou un métal,
le générateur de dihydrogène comportant un boîtier de catalyse (100) logé dans l'espace intérieur d'enceinte, le boîtier de catalyse comportant des première (110) et deuxième (115) pièces définissant une chambre de catalyse (135) dans laquelle le support de catalyse (20) est logé, les première et deuxième pièces étant mobiles l'une par rapport à l'autre entre une position fermée dans laquelle la chambre de catalyse est hermétiquement close et une position ouverte dans laquelle la chambre de catalyse est en communication fluidique avec l'espace intérieur d'enceinte.

2. Générateur de dihydrogène selon la revendication 1, le moyen de chauffage étant configuré pour chauffer le support de catalyse par effet Joule.

3. Générateur de dihydrogène selon la revendication 2, le moyen de chauffage comportant un générateur de courant électrique (25) connecté électriquement au support de catalyse.

4. Générateur de dihydrogène selon l'une quelconque des revendications précédentes, le moyen de chauffage comportant un générateur de champ électromagnétique (80) configuré pour induire un courant électrique dans le support de catalyse.

5. Générateur de dihydrogène selon l'une quelconques des revendications précédentes, le moyen de chauffage comportant un générateur de micro-onde configuré pour émettre au moins une micro-onde focalisée dans le support de catalyse.

6. Générateur de dihydrogène selon l'une quelconque des revendications précédentes, le métal étant choisi parmi le fer, le cobalt, le cuivre, l'aluminium, le nickel, le magnésium, le manganèse et leurs alliages.

7. Générateur de dihydrogène selon l'une quelconque des revendications précédentes, le support de catalyse comportant un revêtement catalytique comportant, de préférence formé par, le catalyseur, qui recouvre au moins partiellement, voire complètement les parois des pores de la mousse.

8. Générateur de dihydrogène selon l'une quelconque des revendications précédentes, le catalyseur étant en un métal platinoïde, de préférence choisi parmi le platine, le palladium, le rhodium, l'iridium et leurs alliages.

9. Générateur de dihydrogène selon l'une quelconque des revendications précédentes, l'enceinte contenant le liquide réactif qui est un liquide organique porteur d'hydrogène riche, de préférence choisi parmi le toluène, le naphtalène, le dibenzyltoluène, le N-éthylcarbazole, et leurs mélanges.

10. Générateur de dihydrogène selon l'une quelconque des revendications précédentes, le rapport du volume de la chambre de catalyse, mesuré dans la configuration fermée du boîtier de catalyse, sur le volume du support de catalyse étant supérieur à 1 %, de préférence supérieur à 10 %.

11. Générateur selon l'une quelconque des revendications précédentes, le matériau électriquement conducteur présentant une conductivité électrique supérieure à 250 Ω⁻¹.m⁻¹.

12. Générateur selon la revendication précédente, le matériau électriquement conducteur présentant une conductivité électrique supérieure à 1000 Ω⁻¹.m⁻¹, de préférence supérieure à 2500 Ω⁻¹.m⁻¹.

13. Générateur selon la revendication précédente, le matériau électriquement conducteur présentant une conductivité électrique supérieure à 2500 Ω⁻¹.m⁻¹.

14. Générateur selon l'une quelconque des revendications précédentes, la mousse présentant une taille moyenne des pores supérieure à 500 µm.

15. Dispositif (330) comportant un appareil de production d'énergie (335) et un générateur de dihydrogène (5) selon l'une quelconque des revendications précédentes, pour alimenter en dihydrogène l'appareil de production d'énergie, l'appareil étant configuré pour produire de l'énergie sous forme de chaleur et/ou d'un courant électrique, par réaction du dihydrogène, le dispositif étant notamment choisi parmi un drone, un téléphone intelligent, un ordinateur portable, une voiture, un bus, un vélo et une moto.

## Patentansprüche

1. Diwasserstoffgenerator (5), umfassend:
- eine Einhausung (10), die einen Einhausungsinnenraum (15) definiert, um eine reaktive Flüssigkeit (30) zu enthalten, die geeignet ist, bei Kontakt mit einem Katalysator Diwasserstoff zu generieren,
- einen Katalyseträger (20), der in dem Einhausungsinnenraum aufgenommen ist, wobei der Katalyseträger porös und mit der reaktiven Flüssigkeit imprägnierbar ist und einen Katalysator für die Reaktion zur Generierung von Diwasserstoff ausgehend von der reaktiven Flüssigkeit umfasst,
- ein Heizeinrichtung (70),
wobei der Katalyseträger dazu ausgestaltet ist, von der Heizeinrichtung auf andere Weise erhitzt zu werden als durch die Wärmeübertragung, die in dem konvektiven Wärmeaustausch mit der reaktiven Flüssigkeit und dem konduktiven Wärmeaustausch mit der reaktiven Flüssigkeit und der Strahlung einer von dem Katalyseträger entfernten Wärmequelle besteht, wobei der Katalyseträger einen festen Schaum aus einem elektrisch leitenden Material umfasst, das Kohlenstoff in Form von Graphit und/oder ein Metall ist,
wobei der Diwasserstoffgenerator ein Katalysegehäuse (100) umfasst, das in dem Einhausungsinnenraum aufgenommen ist, wobei das Katalysegehäuse erste (110) und zweite (115) Teile umfasst, die eine Katalysekammer (135) definieren, in welcher der Katalyseträger (20) aufgenommen ist, wobei die ersten und zweiten Teile in Bezug aufeinander zwischen einer geschlossenen Stellung, in welcher die Katalysekammer hermetisch abgeschlossen ist, und einer geöffneten Stellung, in welcher die Katalysekammer in Fluidverbindung mit dem Einhausungsinnenraum steht, beweglich sind.

2. Diwasserstoffgenerator nach Anspruch 1, wobei die Heizeinrichtung dazu ausgestaltet ist, den Katalyseträger durch Joule-Effekt zu erhitzen.

3. Diwasserstoffgenerator nach Anspruch 2, wobei die Heizeinrichtung einen Generator für elektrischen Strom (25) umfasst, der elektrisch an den Katalyseträger angeschlossen ist.

4. Diwasserstoffgenerator nach einem der vorhergehenden Ansprüche, wobei die Heizeinrichtung einen Generator für ein elektromagnetisches Feld (80) umfasst, der dazu ausgestaltet ist, einen elektrischen Strom in dem Katalyseträger zu induzieren.

5. Diwasserstoffgenerator nach einem der vorhergehenden Ansprüche, wobei die Heizeinrichtung einen Mikrowellengenerator umfasst, der dazu ausgestaltet ist, mindestens eine fokussierte Mikrowelle in den Katalyseträger auszusenden.

6. Diwasserstoffgenerator nach einem der vorhergehenden Ansprüche, wobei das Metall unter Eisen, Kobalt, Kupfer, Aluminium, Nickel, Magnesium, Mangan und ihren Legierungen gewählt ist.

7. Diwasserstoffgenerator nach einem der vorhergehenden Ansprüche, wobei der Katalyseträger eine katalytische Beschichtung umfasst, die den Katalysator umfasst, bevorzugt durch ihn gebildet wird, und die die Wände der Poren des Schaums mindestens teilweise oder sogar vollständig bedeckt.

8. Diwasserstoffgenerator nach einem der vorhergehenden Ansprüche, wobei der Katalysator aus einem Platinmetall ist, das bevorzugt unter Platin, Palladium, Rhodium, Iridium und ihren Legierungen gewählt ist.

9. Diwasserstoffgenerator nach einem der vorhergehenden Ansprüche, wobei die Einhausung die reaktive Flüssigkeit enthält, die eine reiche organische Wasserstoffträgerflüssigkeit ist, die bevorzugt unter Toluol, Naphthalin, Dibenzyltoluol, N-Ethylcarbazol und ihren Mischungen gewählt ist.

10. Diwasserstoffgenerator nach einem der vorhergehenden Ansprüche, wobei das Verhältnis des Volumens der Katalysekammer, gemessen in der geschlossenen Konfiguration des Katalysegehäuses, zum Volumen des Katalyseträgers größer als 1 %, bevorzugt größer als 10 % ist.

11. Generator nach einem der vorhergehenden Ansprüche, wobei das elektrisch leitende Material eine elektrische Leitfähigkeit von mehr als 250 Ω⁻¹.m⁻¹ aufweist.

12. Generator nach dem vorhergehenden Anspruch, wobei das elektrisch leitende Material eine elektrische Leitfähigkeit von mehr als 1000 Ω⁻¹.m⁻¹, bevorzugt von mehr als 2500 Ω⁻¹.m⁻¹ aufweist.

13. Generator nach dem vorhergehenden Anspruch, wobei das elektrisch leitende Material eine elektrische Leitfähigkeit von mehr als 2500 Ω⁻¹.m⁻¹ aufweist.

14. Generator nach einem der vorhergehenden Ansprüche, wobei der Schaum eine mittlere Größe der Poren von mehr als 500 µm aufweist.

15. Vorrichtung (330), umfassend ein Energieerzeugungsgerät (335) und einen Diwasserstoffgenerator (5) nach einem der vorhergehenden Ansprüche, um das Energieerzeugungsgerät mit Diwasserstoff zu versorgen, wobei das Gerät dazu ausgestaltet ist, Energie in Form von Wärme und/oder eines elektrischen Stroms durch Reaktion des Diwasserstoffs zu erzeugen, wobei die Vorrichtung insbesondere unter einer Drohne, einem Smartphone, einem Laptop, einem Auto, einem Bus, einem Fahrrad und einem Motorrad gewählt ist.

## Claims

1. Dihydrogen generator (5) comprising:
- an enclosure (10) defining an enclosure interior space (15) for containing a reactive liquid (30) capable of generating dihydrogen in contact with a catalyst,
- a catalyst support (20) housed in the enclosure interior space, the catalyst support being porous and impregnatable by the reactive liquid and comprising a catalyst for the reaction to generate dihydrogen from the reactive liquid,
- a heating means (70),
the catalyst support being configured to be heated by the heating means other than by heat transfer consisting of convective heat exchange with the reactive liquid and conductive heat exchange with the reactive liquid and radiation from a heat source remote from the catalyst support, the catalyst support comprising a solid foam of an electrically conductive material which is carbon in the form of graphite and/or a metal,
the dihydrogen generator comprising a catalyst housing (100) housed within the enclosure interior space, the catalyst housing comprising first (110) and second (115) parts defining a catalyst chamber (135) in which the catalyst support (20) is housed, the first and second parts being movable relative to each other between a closed position in which the catalyst chamber is hermetically sealed and an open position in which the catalyst chamber is in fluid communication with the enclosure interior space.

2. Dihydrogen generator according to Claim 1, the heating means being configured to heat the catalyst support by Joule effect.

3. Dihydrogen generator according to Claim 2, the heating means comprising an electric current generator (25) electrically connected to the catalyst support.

4. Dihydrogen generator according to any of the preceding claims, the heating means comprising an electromagnetic field generator (80) configured to induce an electric current in the catalyst support.

5. Dihydrogen generator according to any of the preceding claims, the heating means comprising a microwave generator configured to emit at least one focused microwave into the catalyst support.

6. Dihydrogen generator according to any of the preceding claims, the metal being chosen from iron, cobalt, copper, aluminium, nickel, magnesium, manganese and alloys thereof.

7. Dihydrogen generator according to any of the preceding claims, wherein the catalyst support has a catalytic coating comprising, preferably formed by, the catalyst, which at least partially or even completely covers the pore walls of the foam.

8. Dihydrogen generator according to any of the preceding claims, the catalyst being of a platinoid metal, preferably chosen from platinum, palladium, rhodium, iridium and alloys thereof.

9. Dihydrogen generator according to any of the preceding claims, the enclosure containing the reactive liquid which is a rich liquid organic hydrogen carrier, preferably chosen from toluene, naphthalene, dibenzyltoluene, N-ethylcarbazole, and mixtures thereof.

10. Dihydrogen generator according to any of the preceding claims, the ratio of the volume of the catalyst chamber, measured in the closed configuration of the catalyst housing, to the volume of the catalyst support being greater than 1%, preferably greater than 10%.

11. Generator according to any of the preceding claims, the electrically conductive material having an electrical conductivity greater than 250 Ω⁻¹.m-¹.

12. Generator according to the preceding claims, the electrically conductive material having an electrical conductivity greater than 1000 Ω⁻¹.m⁻¹, preferably greater than 2500 Ω⁻¹.m⁻¹.

13. Generator according to the preceding claim, the electrically conductive material having an electrical conductivity greater than 2500 Ω⁻¹.m⁻¹.

14. Generator according to any of the preceding claims, the foam having an average pore size greater than 500 µm.

15. Device (330) comprising an energy generating device (335) and a dihydrogen generator (5) according to any one of the preceding claims, for supplying dihydrogen to the energy generating device, the device being configured to generate energy in the form of heat and/or electric current by reaction of the dihydrogen, the device being in particular chosen from among a drone, a smart phone, a portable computer, a car, a bus, a bicycle and a motorcycle.
